# EUROPÄISCHE PATENTANMELDUNG

(11) **EP 1 306 409 A2**
(43) Veröffentlichungstag der Anmeldung: **02.05.2003**
(21) Anmeldenummer: 02018541.9
(22) Anmeldetag: 17.08.2002
(51) Int. Cl.: C08L 67/02, H01M 8/00, H01M 2/00

(54) **Leitungsystem aus einer Polyesterformmasse in einer Brennstoffzelle**

(30) Priorität: 11.10.2001 DE 10150258
(71) Anmelder: Degussa AG, 40474 Düsseldorf (DE)
(72) Erfinder: Häger, Harald, Dr., 45665 Recklinghausen (DE); Schmitz, Guido, Dr., 48249 Dülmen (DE); Ries, Hans, Dr., 45772 Marl (DE); Farges, Olivier, 45768 Marl (DE)

(57) **Zusammenfassung**

Ein Element eines Leitungssystems einer Brennstoffzelle, das dadurch gekennzeichnet ist, dass der Teil, der mit dem geförderten Medium in Kontakt steht, aus einer Polyesterformmasse besteht, läßt sich kostengünstig herstellen, hat eine gute Sperrwirkung gegenüber dem geförderten Medium und setzt weitestgehend keine Komponenten frei, die den Katalysator vergiften oder polarisieren.

## Beschreibung

Gegenstand der Anmeldung ist ein Element eines Leitungssystems einer Brennstoffzelle, das mit Fluiden und Gasen in Kontakt kommt.

Die sich immer weiter verschärfende Umweltgesetzgebung zwingt die Hersteller von Kraftfahrzeugen dazu, über neue Antriebskonzepte nachzudenken, da gerade auch NOₓ-Emissionen immer stärker in den Focus des Gesetzgebers geraten. Ein mögliches alternatives Antriebskonzept stellt die Brennstoffzelle dar.

Brennstoffzellen sind in einer Vielzahl von Ausführungsformen seit langem Stand der Technik. Ihnen ist gemeinsam, dass dem Anodenraum ein Brennstoff und dem Kathodenraum Luft oder Sauerstoff zugeführt wird. Diese Reaktanden werden an den Elektroden katalytisch umgesetzt. Als Brennstoff können Wasserstoff, Methanol, Glykol, Methan, Butan, höhere Kohlenwasserstoffe usw. eingesetzt werden, jedoch werden nur bei ersterem so hohe Stromdichten erzielt, dass eine annähernd bei Raumtemperatur arbeitende Brennstoffzelle für den Antrieb eines Kraftfahrzeugs eingesetzt werden kann. Die übrigen Brennstoffe lassen sich nur in einer Mittel- oder Hochtemperaturbrennstoffzelle befriedigend umsetzen, was sich aber in erster Linie für stationäre Anlagen anbietet. In einem Kraftfahrzeug mit Elektroantrieb, das seinen Strom von einem Brennstoffzellenaggregat bezieht, welches mit Methanol oder Kohlenwasserstoffen betrieben werden soll, wird daher der Brennstoff üblicherweise in einem Reformer mit Wasserdampf bei höherer Temperatur zu Wasserstoff und Kohlendioxid umgesetzt, das Reaktionsgas vom Nebenprodukt Kohlenmonoxid befreit und das Wasserstoff-CO₂-Gemisch in den Anodenraum geleitet. Derzeit wird hierfür die "proton exchange membrane fuel cell" favorisiert, bei der sich zwischen den porösen, katalysatorhaltigen Elektroden eine wassergesättigte saure Ionenaustauschermembran befindet. Jedoch wird auch für mobile Anwendungen an der Direktoxidation von Methanol gearbeitet, was einen Reformer überflüssig machen würde.

Bislang werden die Leitungen für die Zuführung von Brennstoff üblicherweise aus Edelstahl hergestellt. Derartige Leitungen sind jedoch teuer.

Es stellte sich daher die Aufgabe, hierfür preisgünstigere Leitungen zur Verfügung zu stellen, die jedoch eine gute Sperrwirkung gegenüber Kohlenwasserstoffen, Alkoholen, Wasser, Alkohol/Wasser-Gemischen und Wasserstoff besitzen müssen. Darüber hinaus muss absolut sichergestellt sein, dass aus dem Material des Leitungssystems weitestgehend keine Komponenten herausgelöst werden, die mit dem Elektrolyten oder dem Anodenmaterial reagieren können, um eine Vergiftung des Katalysators oder eine unerwünschte Polarisation zu verhindern.

Diese Aufgabe wird gelöst durch ein Element eines Leitungssystems einer Brennstoffzelle, bei dem der Teil, der mit dem geförderten Medium in Kontakt steht, aus einer Polyesterformmasse besteht.

Derartige Elemente sind beispielsweise ein Rohr oder ein rohrartiges Formteil, das entweder ein einschichtiges Rohr oder ein Mehrschichtrohr sein kann, bei dem die innerste Schicht aus der Polyesterformmasse besteht. Ein derartiges Rohr oder rohrartiges Formteil kann entweder als Glattrohr, das anschließend gegebenenfalls thermogeformt wird, oder als Wellrohr hergestellt werden. Weiterhin sind solche Bauteile zu nennen, in denen Fluide gelagert werden, etwa Vorratsgefäße. Auch hier können diese Bauteile entweder nur aus der Polyesterformmasse bestehen oder aus einem mehrschichtigen Verbund mit einer innersten Schicht aus der Polyesterformmasse. Weitere Elemente sind beispielsweise Anbindungselemente, etwa sogenannte Quickconnectoren, Adaptoren, Filter, Bauteile in Pumpen oder Bauteile in Ventilen.

Die erfindungsgemäßen Elemente können mit Hilfe der üblichen Verfahren zur Kunststoffverarbeitung hergestellt werden, beispielsweise mittels Extrusion (z.B. Monorohr), Coextrusion (z. B. Mehrschichtrohr), Blasformen bzw. Sonderformen hiervon wie Saugblasformen oder 3D-Schlauchmanipulation, wobei der Vorformling bei einschichtigen Elementen extrudiert und bei mehrschichtigen Elementen coextrudiert wird, Spritzgießen sowie Sonderverfahren hiervon wie z. B. Fluid Injections-Technik, oder Rotationssintern.

Thermoplastische Polyester werden durch Polykondensation von Diolen mit Dicarbonsäuren bzw. deren polyesterbildenden Derivaten wie Dimethylestern hergestellt. Geeignete Diole haben die Formel HO-R-OH, wobei R einen divalenten, verzweigten oder unverzweigten aliphatischen und/oder cycloaliphatischen Rest mit 2 bis 40, vorzugsweise 2 bis 12, C-Atomen darstellt. Geeignete Dicarbonsäuren haben die Formel HOOC-R'-COOH, wobei R' einen divalenten aromatischen Rest mit 6 bis 20, vorzugsweise 6 bis 12, C-Atomen bedeutet.

Als Beispiel für Diole seien Ethylenglykol, Trimethylenglykol, Tetramethylenglykol, 2-Butendiol-1.4, Hexamethylenglykol, Neopentylglykol, Cyclohexandimethanol sowie das C₃₆-Diol Dimerdiol genannt. Die Diole können alleine oder als Diolgemisch eingesetzt werden.

Als aromatische Dicarbonsäuren kommen z. B. Terephthalsäure, Isophthalsäure, 1.4-, 1.5-, 2.6- bzw. 2.7-Naphthalindicarbonsäure, Diphensäure und Diphenylether-4.4'-dicarbonsäure infrage. Bis zu 30 Mol-% dieser Dicarbonsäuren und bevorzugt bis zu 10 Mol-% können durch aliphatische oder cycloaliphatische Dicarbonsäuren mit 3 bis 50 C-Atomen und bevorzugt mit 6 bis 40 C-Atomen wie z. B. Bernsteinsäure, Adipinsäure, Sebacinsäure, Dodecandisäure oder Cyclohexan-1.4-dicarbonsäure ersetzt sein.

Beispiele für geeignete Polyester sind Polyethylenterephthalat, Polypropylenterephthalat, Polybutylenterephthalat, Polyethylen-2.6-naphthalat, Polypropylen-2.6-naphthalat, Polybutylen-2.6-naphthalat, Poly(1.4-dimethylencyclohexanterephthalat) und Poly(1.4-dimethylencyclohexan-2.6-naphthalat).

Die Herstellung dieser Polyester gehört zum Stand der Technik (DE-OSS 24 07 155, 24 07 156; Ullmanns Encyclopädie der technischen Chemie, 4. Aufl., Bd. 19, Seiten 65 ff., Verlag Chemie, Weinheim, 1980).

Als besonders geeignet haben sich Polyester herausgestellt, die nicht mehr als 300 ppm, bevorzugt nicht mehr als 150 ppm, besonders bevorzugt nicht mehr als 100 ppm und ganz besonders bevorzugt nicht mehr als 50 ppm, jeweils bezogen auf den Metallgehalt, einer die Umesterung und/oder die Veresterung katalysierenden Metallverbindung oder deren Umwandlungsprodukte enthalten, auch wenn der Grund hierfür nicht klar ist.

Die Polyesterformmasse kann bis zu etwa 40 Gew.-% andere Thermoplaste enthalten, insbesondere schlagzähmodifizierende Kautschuke. Darüber hinaus kann sie die für Polyester üblichen Hilfs- und Zusatzstoffe enthalten wie z. B. Verarbeitungshilfsmittel, Nukleierungsmittel, interkalierte oder exfolierte Schichtsilikate, Kristallisationsbeschleuniger, Licht- bzw. Wärmestabilisatoren, Metallfänger bzw. Komplexbildner, leitfähigkeitserhöhende Additive wie Ruß, Kohlenstofffasern, Stahlfasern, Nanotubes etc., Verstärkungsadditive wie z. B. Glasfasern, oder Pigmente.

Diese Additive müssen so ausgewählt werden, dass sie die Leitfähigkeit des Mediums, das an der Polyesterformmasse vorbeigeleitet wird, nicht oder nur in geringem Maße erhöhen. Falls Wasser als Medium verwendet wird, sollte sich die Leitfähigkeit bei 90 °C nur um maximal 100 µS/cm, bevorzugt maximal 50 µS/cm und besonders bevorzugt maximal 30 µS/cm erhöhen. Wird ein Gemisch aus Wasser und Methanol (60 : 40 Vol-%) verwendet, sollte sich die Leitfähigkeit bei 90 °C nur um maximal 80 µS/cm, bevorzugt maximal 40 µS/cm und besonders bevorzugt maximal 20 µS/cm erhöhen.

In der Regel besitzt die Polyesterformmasse eine kontinuierliche Polyesterphase, wobei es bevorzugt ist, dass die gesamte Matrix aus Polyester besteht und die übrigen Komponenten hierin dispergiert sind.

In einer bevorzugten Ausführungsform ist die Polyesterformmasse mittels der oben genannten leitfähigkeitserhöhenden Additive antielektrostatisch ausgerüstet, so dass beim Transport brennbarer Medien auftretende elektrostatische Aufladungen sicher abgeleitet werden können. In diesem Fall sind das Leitungssystem und die Anode, wie im Falle der bisher verwendeten Edelstahlleitungen, durch ein isolierendes Element voneinander getrennt.

Das erfindungsgemäße Leitungssystem bzw. dessen einzelne Elemente läßt sich kostengünstig herstellen. Es hat darüber hinaus auch ein geringeres Gewicht, was gerade bei mobiler Verwendung von Vorteil ist.

Die Erfindung bezieht sich auch auf ein Brennstoffzellensystem, das ein erfindungsgemäßes Element enthält, beispielweise für den Antrieb eines Kraftfahrzeugs.

## Patentansprüche

1. Element eines Leitungssystems einer Brennstoffzelle,
**dadurch gekennzeichnet,**
**dass** der Teil, der mit dem geförderten Medium in Kontakt steht, aus einer Polyesterformmasse besteht.

2. Element eines Leitungssystems einer Brennstoffzelle gemäß Anspruch 1,
**dadurch gekennzeichnet,**
**dass** es ein Rohr, ein Mehrschichtrohr, ein Vorratsgefäß, ein Anbindungselement, ein Adapter, ein Filter, ein Bauteil einer Pumpe oder ein Bauteil eines Ventils ist.

3. Element eines Leitungssystems einer Brennstoffzelle gemäß einem der vorhergehenden
Ansprüche,
**dadurch gekennzeichnet,**
**dass** die Polyesterformmasse auf einem Polyester basiert, der ausgewählt ist aus Polyethylenterephthalat, Polypropylenterephthalat, Polybutylenterephthalat, Polyethylen-2.6-naphthalat, Polypropylen-2.6-naphthalat, Polybutylen-2.6-naphthalat, Poly(1.4-dimethylencyclohexanterephthalat und Poly(1.4-dimethylencyclohexan-2.6-naphthalat).

4. Element eines Leitungssystems einer Brennstoffzelle gemäß einem der vorhergehenden Ansprüche,
**dadurch gekennzeichnet,**
**dass** die Polyesterformmasse antielektrostatisch ausgerüstet ist.

5. Brennstoffzellensystem, das ein Element gemäß einem der vorhergehenden Ansprüche enthält.

6. Brennstoffzellensystem für den Antrieb eines Kraftfahrzeugs, das ein Element gemäß einem der Ansprüche 1 bis 4 enthält.
